Europäisches Patentamt

European Patent Office

Office européen des brevets

(11) Veröffentlichungsnummer: **0 213 322 B1**

# EUROPÄISCHE PATENTSCHRIFT

(45) Veröffentlichungstag der Patentschrift: **13.11.91**

(21) Anmeldenummer: **86109098.3**

(22) Anmeldetag: **03.07.86**

(51) Int. Cl.⁵: **C08J 7/04**, C08J 9/34,
C09D 183/00, //B60R13/00

(54) **Schaumstoffplatte mit Haut.**

(30) Priorität: **11.07.85 DE 8520049 U**

(43) Veröffentlichungstag der Anmeldung:
**11.03.87 Patentblatt 87/11**

(45) Bekanntmachung des Hinweises auf die
Patenterteilung:
**13.11.91 Patentblatt 91/46**

(84) Benannte Vertragsstaaten:
**AT BE CH DE FR GB IT LI LU NL SE**

(56) Entgegenhaltungen:
DE-A- 2 258 937
DE-A- 3 018 074
GB-A- 1 049 193
GB-A- 1 175 835

(73) Patentinhaber: **Irbit Research + Consulting
AG
Rue Saint Pierre 24
CH-1701 Fribourg(CH)**

(72) Erfinder: **Tschudin-Mahrer, Rolf
Römerstr. 23
CH-4415 Lausen(CH)**

(74) Vertreter: **Rieder, Hans-Joachim, Dr.
Corneliusstrasse 45 Postfach 11 04 51
W-5600 Wuppertal 11(DE)**

## Beschreibung

Die Erfindung betrifft eine Schaumstoffplatte mit einer Haut die mindestens auf einer Seitenfläche von einer Silikonschicht überdeckt ist.

Es ist bekannt, bspw. die Motorhaube von Kraftfahrzeugen mit einem Schalldämmkörper aus Schaumstoffmaterial zu unterfüttern. Zur Fixierung einer solchen Schaumstoffplatte dient bspw. eine im Rücken derselben aufgetragene Selbstkleberschicht. Auch druckknopfartige Befestigungen oder irreversible Rastmittel sind verbreitet Die dem Motorraum zugewandte Seite der Schaumstoffplatte besitzt eine Haut, die das Eindringen von Wasser, Öl und dergleichen verhindern soll. Bei offenzelligem Schaumstoff besteht die Gefahr eines recht tiefen Eindringens solcher Medien, welche die Schaumstoffplatte zumindest partiell bezüglich der Schalldämm- und Schallabsorptionswerte beeinträchtigen. Die Haut läßt sich durch Aufbringen einer Folie erreichen, was auf thermischem Wege erfolgt. Die Verletzbarkeit solcher im Grunde auch die Flexibilität der Schaumstoffplatte beeinträchtigenden Folien-Häute ist relativ hoch.

Die DE-A-22 58 937 offenbart eine Schaumstoffplatte aus Polyurethanschäumen mit integrierter Haut, die durch einen Überzug aus mit organischen Verbindungen modifizierten Silikonharzen gekennzeichnet sind. Um diesen Schaumstoff aus einer Form besser entformen zu können, wird die Form mit einem Überzug aus mit organischen Verbindungen modifizierten Silikonharzen versehen. Der in die Form eingeschäumte Schaum kommt in Anlage an die Beschichtung der Form und nimmt auf seiner integrierten Haut einen entsprechenden Überzug an. Nachteilhaft an diesen beschichteten Schaumstoffplatte ist jedoch die ungenügende Verankerung der Schicht mit dem Schaum.

Andererseits ist es aus der GB-A-1 175 835 bekannt, die Haut durch Verschmelzung des Schaumstoffes zu bilden.

Aus der deutschen Offenlegungsschrift 27 55 819 ist es überdies bekannt, eine Schutzschicht auf einen flächigen Gegenstand, der auch eine Gewirke oder Vlies sein kann, aufzurakeln. Diese Schrift gibt jedoch keinen Hinweis darauf, eine Schaumstoffplatte mit einer durch Verschmelzen gebildeten luftdurchlässigen Haut zu versehen, um die Beschichtung darin zu verankern.

Aufgabe der Erfindung ist es daher, eine Schaumstoffplatte, wie sie als bekannt vorausgesetzt ist, anzugeben, die in herstellungstechnisch einfacher, gebrauchsstabiler Weise so ausgebildet ist, daß bei günstigen Schalldämm- bzw. Schallabsorptionsverhalten eine gleichwohl dichte hochelastische Haut gegeben ist.

Gelöst wird diese Aufgabe dadurch, daß die Schicht in einer durch Verschmelzen des Schaumstoffes gebildeten luftdurchlässigen Haut verankert ist.

Zufolge solcher Ausgestaltung ist eine den mechanischen Beanspruchungen bei Fertigung, Lagerung, Montage und auch später besser gewachsene Schaumstoffplatte realisiert, die überdies auch die angestrebten Schalldämmwerte bringt. Es ist der günstigste Kompromiss erzielt zwischen Veränderung des Schalldämmverhaltens zu den übrigen mechanischen Eigenschaften, wie Dichtigkeit, Verformbarkeit, Strömungsreibung. Die der durch Verschmelzen geschaffenen Haut beigegebene zweite Haut läßt sich überraschend gleichmäßig auftragen, dies selbst bei einer sogar stark reliefartigen bis bizarren Oberfächenstruktur der Schaumstoffplatte. Die Silikonschicht wird durch Sprühen aufgetragen. Bei flacheren Strukturen empfiehlt sich ein Aufwalzen (Kalandern) oder Rakeln. Es wird eine hohe mechanische Festigkeit der geschaffenen Doppelhaut erreicht. Diese erweist sich als völlig dicht. Die Verankerung in der luftdurchlässigen, durch Verschmelzen des Schaumgerüstes Verwirklichten Haut bringt einen hohen Verbindungsgrad. Die Silikonschicht dringt dabei nicht tiefer als in diese Haut ein. Der dahinterliegende Gerüstbereich des Schaumstoffes behält seine volle Elastizität. Zufolge der großen Dehnfähigkeit der sehr dünn aufgetragenen Silikonschicht ergibt sich eine hohe, bis in die tiefsten Zonen vorliegende Gesamtelastizität mit großer Verformungseigenschaft. Dies kommt dem angestrebten Ziel einer Verringerung der Verletzbarkeit der Haut sehr entgegen; die Haut weicht gut aus. Eine Schaumstoffplatte mit so stark herabgesetzter Verletzungsempfindlichkeit kann sogar von Robotern montiert werden. Allerdings ist dabei auf eine gewisse Mindestflächenstabilität zu achten, die aber bei Verwendung von Trägerplatten, Versteifungseinlagen oder dergleichen durchaus gegeben ist. Schließlich ist es noch von Vorteil, daß die Dicke der Silikonbeschichtung etwa derjenigen der Haut entspricht. Die Werte liegen bei einem bis wenigen Zehntelmillimetern und können als Dämm- bzw. Absorptionsfaktor Berücksichtigung finden.

Der Gegenstand der Erfindung ist nachstehend anhand eines zeichnerisch veranschaulichten Ausführungsbeispieles näher erläutert. Es zeigt

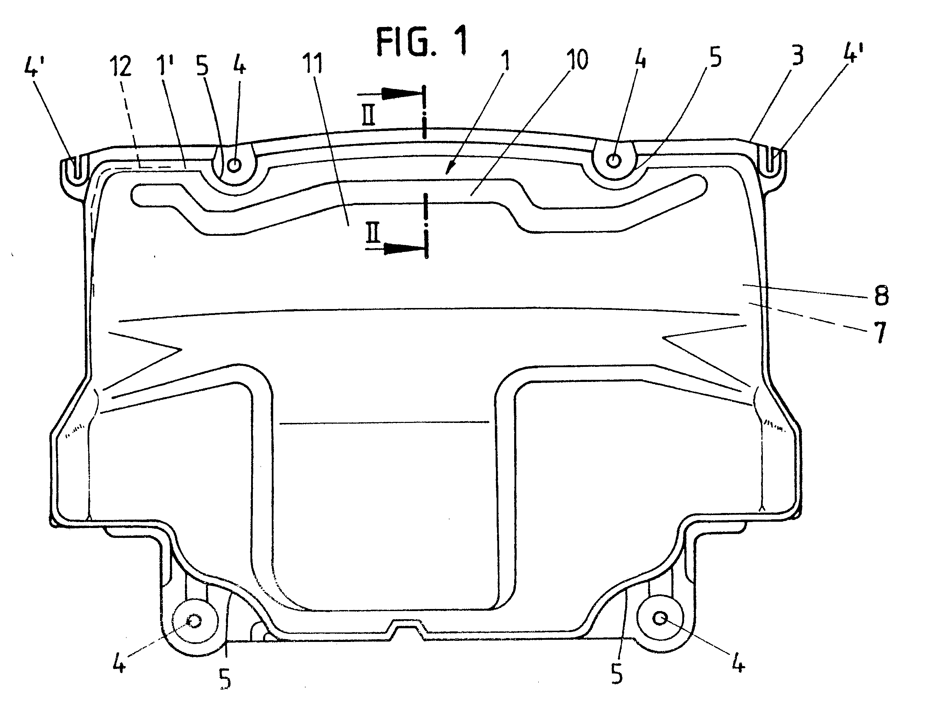

Fig. 1 die Draufsicht auf die erfindungsgemäß ausgebildete Schaumstoffplatte,

Fig. 2 den Schnitt gemäß Linie II-II in Fig. 1,

Fig. 3 eine vergrößerte Schnittdarstellung der Randpartie der Schaumstoffplatte und

Fig. 4 eine Vergrößerung des Haut und Silikonschicht aufweisenden Schaumstoffes.

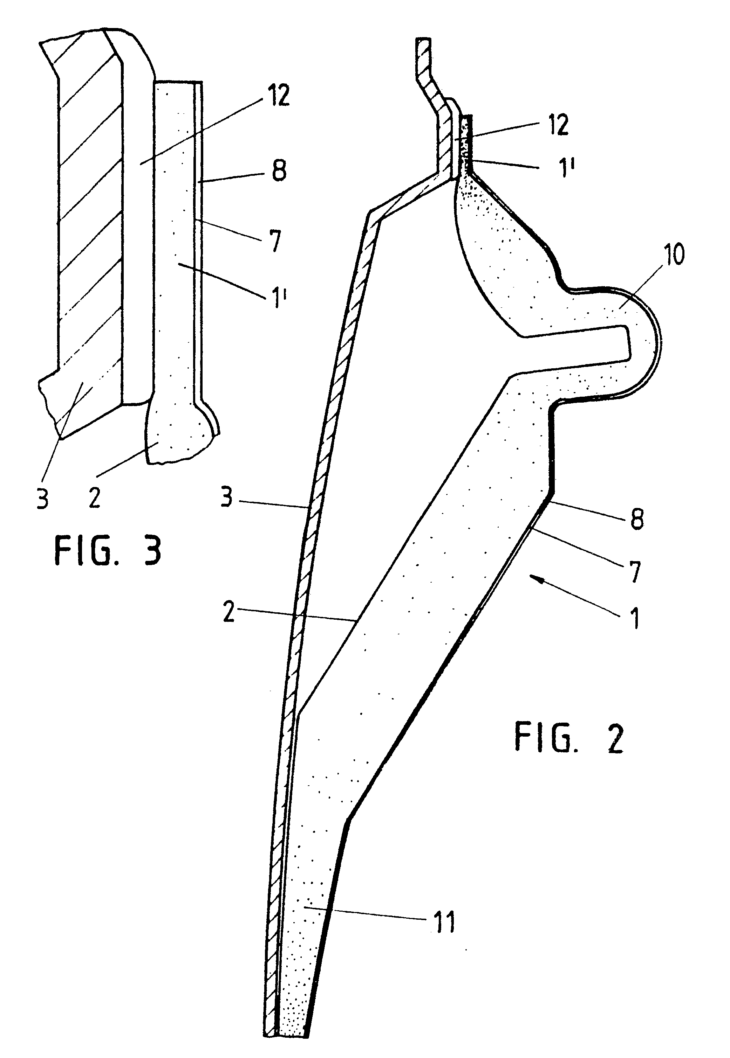

Die als Schallabsorptionskörper ausgebildete Schaumstoffplatte 1 besteht aus offenporigem Weich-Schaumstoff. Sie ist, wie aus Fig. 2 partiell ersichtlich, strukturbildend verformt. Dies kann durch thermisches Tiefziehen erfolgen.

Zur Flächenstabilisierung der Schaumstoffplatte 1 ist ihr Rücken 2 mittels einer Trägerplatte 3 hinterfüttert sein. Es handelt sich bezüglich dieser Trägerplatte 3 um ein Kunststoff-Formteil. Dessen Gestalt berücksichtigt die für den Einsatzzweck erforderliche Formgebung. Letztere kann natürlich stark variieren.

Randseitig der Trägerplatte 3 weist diese Durchbrechungen 4 für nicht näher dargestellte Befestigungsmittel auf. Bezüglich der Durchbrechungen kann es sich um Bohrungen oder auch, wie bei 4' erkennbar, um Steckschlitze handeln.

Im Bereich der Durchbrechungen 4 weist die Schaumstoffplatte 1 Aussparungen 5 auf.

Die der Geräuschwelle zugewandte Seitenfläche der Schaumstoffplatte 1 besitzt eine durch Schließen ihres Schaumstoffgerüsts 6 erzeugte dünne Haut 7. Dieses Verhauten erfolgt zweckmäßig auf thermischem Wege, bspw. durch Überziehen eines Schweißspiegels. Das kann im Durchlaufverfahren geschehen. Bei Herstellung bestimmter Formkörper einer solchen Schaumstoffplatte 1 ziehen sich die Porenränder des Schaumgerüsts beim Tiefziehformen zu.

Die so durch Verschmelzen des Schaumstoffgerüsts 6 realisierte Haut ist überlagert von einer aufgetragenen Silikonschicht 8.

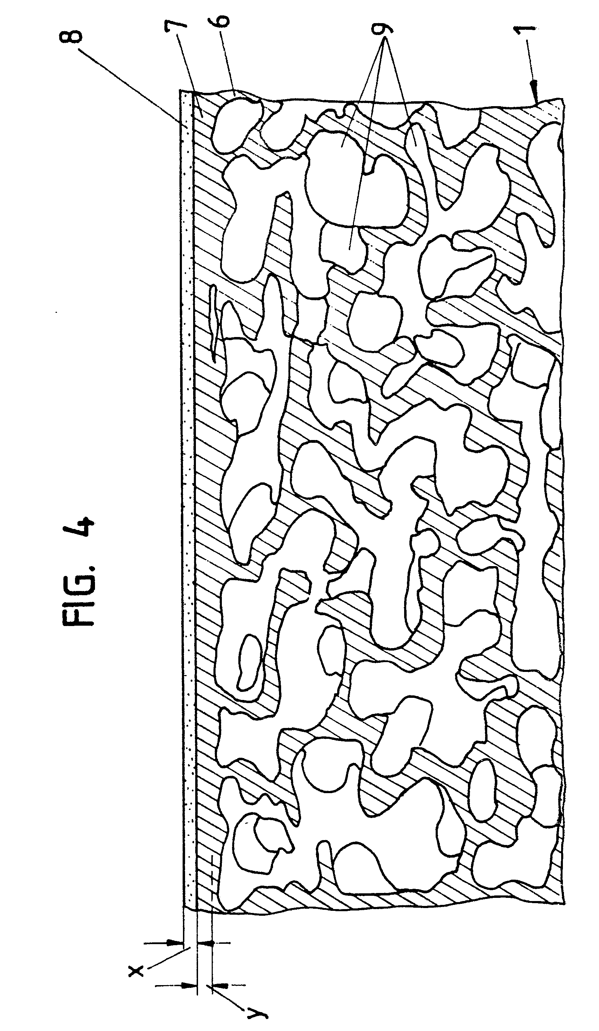

Die Silikonschicht 8 verankert sich in den winzigen Poren der noch luftdurchlässigen Haut 7. Das Silikon dringt dabei jedoch nicht tiefer ein als bis in die Haut 7. Das Schaumstoffgerüst selbst wird nicht beeinträchtigt. Die Poren 9 des letzteren behalten vielmehr ihren zusammenhängenden Höhlungscharakter. Wie Fig. 4 entnehmbar, entspricht die Dicke x der Silikonbeschichtung im wesentlichen derjenigen y der Haut 7.

Die Gesamtdicke liegt in der Regel weit unterhalb 1 mm. Die dadurch voll erhaltene Elastizität des Schaumstoffgerüstes im Verein mit der nur extrem dünnen Haut 7 und ferner die starke Dehnfähigkeit des aufgetragenen Silikons führen zu einer überraschend hohen Verformungseigenschaft. Mechanische Beanspruchungen der Doppelhaut werden so bestens kompensiert. Die Verletzungsempfindlichkeit ist stark herabgesetzt. Das alles führt zu einer auch bei extremen Beanspruchungen erhaltbaren Dichtigkeit der verhauteten Seitenfläche. Es kann nicht zur Neutralisierung von Schaumstoffpartien kommen aufgrund des Eindringens von Wasser, Öl etc.

Andererseits ist das Schalldämmverhalten durch die Doppelverhautung kaum verändert, so daß praktisch die gewohnten hohen Absorptionswerte erhalten bleiben. Dies gilt auch für partiell strukturverdichtete Zonen der Schaumstoffplatte 1, wie sie bspw. aus Fig. 2 erkennbar sind, sei es im Bereich einer durch Tiefziehen erzeugten Rippe 10 oder der verjüngten Plattenzone 11 im unteren Bereich der Fig. 2.

Die Schaumstoffplatte 1 ist auf die Trägerplatte 3 aufgeklebt. Die Klebezone erstreckt sich als schmaler Randstreifen 12 zwischen der komprimierten Randzone 1' der Schaumstoffplatte 1 und der korrespondierenden Randzone der Trägerplatte 3. Es kann sich um thermisch ansprechenden Kleber handeln, so daß Träger 3 und Schaumstoffplatte 1 in einem Arbeitsgang miteinander verbunden werden.

Alle in der Beschreibung erwähnten und in der Zeichnung dargestellten neuen Merkmale sind erfindungswesentlich, auch soweit sie in den Ansprüchen nicht ausdrücklich beansprucht sind.

## Patentansprüche

1. Schaumstoffplatte aus Schaumstoff mit einer Haut, die mindestens auf einer Seitenfläche von einer Silikonschicht (8) überdeckt ist, dadurch gekennzeichnet, daß der Schaumstoff offenporig ist und die Schicht (8) in einer durch Verschmelzen des Schaumstoffes gebildeten luftdurchlässiger Haut (7) verankert ist.

2. Schaumstoffplatte nach Anspruch 1, dadurch gekennzeichnet, daß die Dicke (x) der Silikonbeschichtung (Silikonschicht 8) etwa derjenigen (y) der Haut (7) entspricht.

## Claims

1. Foam panel made from foam having a skin which is covered by a silicon layer (8) on at least one side face, characterised in that the foam is open-cell and the layer (8) is anchored in an air-permeable skin (7) formed by fusing the foam.

2. Foam panel according to claim 1, characterised in that the thickness (x) of the silicon coating (silicon layer 8) corresponds approximately to that (y) of the skin (7).

## Revendications

1. Plaque en matériau synthétique alvéolaire fait d'un matériau en mousse comportant une peau qui est recouverte d'une couche (8) de silicone sur au moins une surface de côté, caractérisée en ce que la mousse est à cellules ou pores ouverts et en ce que la couche (8) est ancrée dans une peau (7) perméable à l'air formée par fusion de la mousse.

2. Plaque en mousse selon la revendication 1, caractérisée en ce que l'épaisseur (x) de la couche de silicone (couche de silicone 8) correspond approximativement à l'épaisseur (y) de la peau (7).

FIG. 1

EP 0 213 322 B1

FIG. 3

FIG. 2

# FIG. 4

EP 0 213 322 B1